# EUROPÄISCHE PATENTSCHRIFT

(11) **EP 3 149 532 B1**
(45) Veröffentlichungstag und Bekanntmachung des Hinweises auf die Patenterteilung: **28.10.2020**
(21) Anmeldenummer: 15726562.0
(22) Anmeldetag: 22.05.2015
(51) Int. Cl.: G02B 21/00

(54) **FUNKTIONSINTEGRIERTES LASER-SCANNING-MIKROSKOP**
FUNCTIONALLY INTEGRATED LASER SCANNING MICROSCOPE
MICROSCOPE À BALAYAGE LASER À FONCTIONS INTÉGRÉES

(30) Priorität: 28.05.2014 DE 102014107606
(43) Veröffentlichungstag der Anmeldung: 05.04.2017
(73) Patentinhaber: Carl Zeiss Microscopy GmbH, 07745 Jena (DE); Carl Zeiss AG, 73447 Oberkochen (DE)
(72) Erfinder: SCHWEDT, Daniel, 07745 Jena (DE); WALD, Matthias, 07751 Jena (DE); ANHUT, Tiemo, 07745 Jena (DE)
(74) Vertreter: Gleim Petri Oehmke Patent- und Rechtsanwaltspartnerschaft mbB
(86) Internationale Anmeldenummer: PCT/EP2015/061378
(87) Internationale Veröffentlichungsnummer: WO 2015/181068

(56) Entgegenhaltungen:
- EP-A1- 2 597 506
- EP-A2- 2 317 363
- DE-A1-102011 077 269
- US-A1- 2008 156 999
- US-A1- 2008 239 475

## Beschreibung

### Gebiet der Erfindung

Die Erfindung betrifft ein funktionsintegriertes Laser-Scanning-Mikroskop, ausgebildet zur Abtastung einer Probe mit einer Laserbeleuchtung wahlweise in einem Konfokal-, Linien- oder Weitfeld-Betriebsmodus.

### Stand der Technik

Konfokale Laser-Scanning-Mikroskope sind an sich bekannt. Hierbei wird ein zu untersuchender Probenbereich mit einem zu einem Punkt fokussierten Laserstrahl abgerastert, für alle abgerasterten Orte werden mittels Bildsensoren die Eigenschaften des Lichtes gemessen, das von der Probensubstanz reflektiert oder durch Fluoreszenz abgegeben wird, und aus den Messergebnissen wird ein Bild des Probenbereiches erzeugt.

Bei der Anwendung der Laser-Scanning-Mikroskopie in der biomedizinischen Forschung rückte in den vergangenen Jahren die Lebendzellforschung immer stärker in den Vordergrund des wissenschaftlichen Interesses, beispielsweise zwecks Studium metabolischer Prozesse in Zellen oder zur Analyse der Wirkung von Pharmaka auf die Zellphysiologie. Dabei kommt der Fluoreszenzmikroskopie eine besondere Bedeutung zu, da sie subzellulare optische Beobachtung mit hoher Differenzierbarkeit verschiedener Organellen ermöglicht und sich das Mikroskop vom reinen Bildgebungssystem zu einem wichtigen Messwerkzeug entwickelt. Das Studium von lebenden Zellen stellt jedoch hohe Anforderungen an das Mikroskopsystem. Zum einen muss die Datenakquise sehr schnell erfolgen, um den zeitlichen Ablauf biologischer Prozesse verfolgen zu können, zum anderen ist die Lebenserhaltung der Zelle zu gewährleisten bzw. die Störung ihres Metabolismus gering zu halten. Das erfordert einen möglichst geringen Lichteintrag in die Zelle bei der Anregung der fluoreszierenden Moleküle, der aber das Signal-Rausch-Verhältnis (SNR) nicht beeinträchtigen sollte, damit die gewünschten Informationen möglichst schnell und genau akquiriert werden können.

Die Erfüllung dieser teils einander konträren Forderungen sind eine bedeutende Herausforderung bei der Weiterentwicklung der Laser-Scanning-Mikroskopie.

Die Schwierigkeiten liegen darin, dass die konfokale Bildgebung aufgrund der punktweise sequentiellen Datenerhebung in ihrer Bildaufnahmerate limitiert ist. Zwar lässt sich die Bildaufnahmerate durch schnellere Abtastung mittels resonanter Galvanometerscanner erhöhen, jedoch wird dadurch die Akkumulationszeit pro Bildsensor entsprechend verringert. Um trotzdem das gewünschte Signal-Rausch-Verhältnis zu erreichen, muss intensiver beleuchtet werden, was wiederum die toxische Belastung der lebenden Probe erhöht.

Eine andere Möglichkeit, die Rate bei der Gewinnung konfokaler Bilder zu erhöhen, ist mit der sogenannten Spinning-Disc-Mikroskopie (SDM) geschaffen worden. Hier wird mittels zweier gekoppelt rotierender Scheiben, wovon die erste Scheibe Mikrolinsen trägt und auf der zweiten den Mikrolinsen zugeordnete Konfokalblenden angeordnet sind, durch Parallelisierung eine erhebliche Erhöhung der Bildaufnahmerate erreicht. Allerdings ist die Höhe der Bildaufnahmerate durch die Eigenschaften der Bildsensoren limitiert. Außerdem sind Spinning-Disc-Mikroskope auf die Funktionalität der Bildgebung spezialisiert, darüber hinaus gehende Messaufgaben wie Fluorescence-lifetime imaging microscopy (FLIM), Förster Resonanz EnergieTransfer-Experimente (FRET) oder Fluoreszenzkorrelationsspektroskopie (FCS) sind nicht oder ungenügend anwendbar.

Schließlich ist auch eine spektrale Bildgebung unumgänglich, um Mehrfachfärbungen der Probe sauber voneinander unterscheiden und Schaltprozesse in der Zelle analysieren zu können. Die spektrale Bildgebung mittels Spinning-Disc-Mikroskopie oder mittels Weitfeldmikroskopen wurde in der Literatur zwar vielfach diskutiert, konnte sich aber kommerziell bisher nicht durchsetzen.

Daraus ergibt sich, dass nach Stand der Technik zwar einzelne, jeweils auf besondere Anwendungen spezialisierte Laser-Scanning-Mikrokopsysteme verfügbar sind, jedoch keine funktionsintegrierten Systeme, die umfassendere, universellere Forderungen erfüllen und dadurch vielfältigere Applikationen ermöglichen.

Eine für die Konfokal- bis zur Weitfeld-Mikroskopie vorgeschlagene Gerätekombination ist beispielsweise das konfokale Laser-Scanning-Mikroskop C2 des Herstellers Nikon, das modular aus diversen optischen Komponenten aufgebaut ist, die je nach Applikation gegeneinander auszutauschen und miteinander koppelbar sind.

Das zu lösende Problem besteht jedoch immer noch in der Verfügbarkeit von Konfokal-, Linien- oder Weitfeld-Betriebsmodus noch während der Beobachtung einer Probe, ohne erst zeitaufwändig den Austausch von Modulen oder Geräteumbauten vornehmen zu müssen.

Davon ausgehend besteht die Aufgabe der Erfindung darin, ein Laser-Scanning-Mikroskop anzugeben, das über verschiedene vorwählbare Betriebsmodalitäten verfügt, die es ermöglichen, das Mikroskop in einfacher Weise auf die jeweiligen experimentellen Erfordernisse zu konfigurieren.

### Beschreibung der Erfindung

Diese Aufgabe wird mit einem Laser-Scanning-Mikroskop der eingangs genannten Art gelöst, welches umfasst:
- eine Laserlichtquelle, einen Beleuchtungs- und Detektionsstrahlengang, eine Detektionseinrichtung und mindestens ein Objektiv, jeweils ausgebildet zur Nutzung für jeden der wählbaren Betriebsmodi, wobei
- der Beleuchtungs- und Detektionsstrahlengang optische Mittel zur Konfiguration der Laserbeleuchtung, mindestens einen Scanner zur Abtastung der Probe mit der Laserbeleuchtung, und einen Strahlteiler zur Trennung von Beleuchtungs- und Detektionslicht umfasst, und
- im Detektionsstrahlengang steuerbare optische Elemente zur Änderung der Strahlführung in Abhängigkeit vom jeweils gewählten Betriebsmodus vorgesehen sind.

Die steuerbaren optischen Baugruppen sind über eine Befehlseingabeeinrichtung mit einer Steuerschaltung verbunden, die zur Umschaltung vom aktuellen auf einen gewünschten anderen Betriebsmodus ausgebildet ist, und es ist Hard- und Software zum Generieren von Bildern der Probe aus den von der Detektionseinrichtung abgegebenen elektronischen Bildsignalen vorhanden.

Der Begriff Laserbeleuchtung schließt im Sinne der Erfindung sowohl eine punkt-, linien-, als auch feldförmige Beleuchtung der Probe oder eines zu untersuchenden Bereiches der Probe ein. Die punkt-, linien- oder feldförmige Konfiguration des Beleuchtungslichtes erfolgt mittels der steuerbaren optischen Elemente in Abhängigkeit vom jeweils vorgegebenen Betriebsmodus.

Ein erfindungsgemäß mit den vorbeschriebenen Merkmalen ausgestattetes Laser-Scanning-Mikroskop ermöglicht es durch Vermeidung der modularen Bauart in einfacher Weise durch Umschaltung auf die einzelnen Betriebsmodi
- schnell und probenschonend Übersichtsbilder des zu untersuchenden Probenbereiches zu gewinnen,
- mit spektraler Bildgebung konfokale Bildaufnahmen bei Bildaufnahmeraten bis zu 30 fps oder mit hohem Signal-Rausch-Verhältnis bei minimaler Probenbelastung zu erzeugen,
- mit spektraler Bildgebung superschnelle Bildaufnahmen bei Bildaufnahmeraten größer 100 fps zu generieren, oder
- parallele 2-dimensionale Bilder einer gewünschten Region in der Probe aufzunehmen.

Die oben genannten Bildaufnahmeraten bis zu 30 fps bzw. größer 100 fps sind dabei jeweils auf 512 Zeilen pro Bild bezogen, mit der Annahme, dass die Bildaufnahmerate aufgrund der Zeilengeschwindigkeit limitiert ist. Die Bildaufnahmerate bei der Erzeugung paralleler 2-dimensionaler Bilder ist zunächst durch die konkrete Geometrie des Bildsensors gegeben, allerdings kann durch ein Mosaikverfahren auch ein größerer Bereich der Probe erfasst werden.

Die Änderung der Strahlführung in Abhängigkeit vom jeweils gewählten Betriebsmodus ist durch Einkopplung der Detektionsstrahlung in unterschiedliche Detektionspfade mittels eines steuerbaren optischen Schaltelementes vorgesehen. Die Detektionspfade unterscheiden sich durch im Strahlengang befindliche optische Baugruppen und/oder durch die Position von mindestens einer Bildebene und einer Pupillenebene. Es ist jeweils ein Detektionspfad einem Betriebsmodus fest zugeordnet.

In einem ersten Detektionspfad ist die Durchleitung und die Beeinflussung der Detektionsstrahlung durch mindestens eine im Strahlengang gestellfest angeordnete optische Baugruppe vorgesehen, während in einem zweiten Detektionspfad die Umleitung der Detektionsstrahlung um diese optische Baugruppe herum vorgesehen ist, um eine Beeinflussung zu vermeiden. Dadurch ist im ersten Detektionspfad an einer definierten Position eine Bildebene, im zweiten Detektionspfad anstelle der Bildebene eine Pupillenebene ausgebildet. Als gestellfeste optische Baugruppe ist beispielsweise ein Linsenarray vorgesehen.

Bevorzugt ist der erste Detektionspfad dem Konfokal-Betriebsmodus, der zweite Detektionspfad dem Linien- und dem Weitfeld-Betriebsmodus zugeordnet.

Im weiteren Verlauf des Detektionsstrahlengangs kann ein zweites optisches Schaltelement vorhanden sein, mit welchem - je nach Schaltstellung - die über den jeweiligen Detektionspfad kommende Detektionsstrahlung in die gemeinsame Detektionseinrichtung eingekoppelt wird.

Als erstes Schaltelement ist beispielweise ein Schaltspiegel vorhanden, als zweites Schaltelement kann ein bewegliches Prisma vorgesehen sein.

Die optischen Schaltelemente sind mit der Steuerschaltung verbunden, welche die Schaltstellungen in Abhängigkeit von dem jeweiligen Betriebsmodus vorgibt. Die Steuerschaltung ist mit der Befehlseingabeeinrichtung zur Umschaltung der Betriebsmodi gekoppelt.

Der Beleuchtungsstrahlengang des erfindungsgemäßen Laser-Scanning-Mikroskops weist einen Beleuchtungsscanner auf zum Bewegen der Laserbeleuchtung über die Objektivpupille hinweg und/oder zum Anpassen der Beleuchtungsstrahlführung auf den jeweils eingestellten Betriebsmodus. Das Bewegungsmuster bzw. der Bewegungsablauf ist dabei vom jeweils gewählten Betriebsmodus abhängig, d.h. die Ansteuerung des Beleuchtungsscanners erfolgt in Abhängigkeit vom Betriebsmodus. Außerdem sind im Beleuchtungsstrahlengang ebenfalls steuerbare optische Baugruppen zur Variation der Strahlführung in Abhängigkeit vom jeweils gewählten Betriebsmodus vorgesehen und mit der Steuerschaltung verbunden.

In bevorzugten Ausführungsformen des erfindungsgemäßen Laser-Scanning-Mikroskops sind
- während des Konfokal-Betriebsmodus eine Linsenbaugruppe in den Beleuchtungsstrahlengang eingeschwenkt,
- während des Linien-Betriebsmodus die Linsenbaugruppe und eine Zylinderlinse eingeschwenkt, und
- während des Weitfeld-Betriebsmodus anstatt der Linsenbaugruppe und der Zylinderlinse ein Teleskop eingeschwenkt.

Funktion und Zweck der einschwenkbaren Baugruppen werden weiter unten anhand von Ausführungsbeispielen näher erläutert. Das Ein- bzw. Ausschwenken wird durch die Steuerschaltung in Abhängigkeit vom vorgegebenen Betriebsmodus veranlasst.

Darüber hinaus ist es denkbar und liegt im Rahmen der Erfindung, die Strahlformung für die einzelnen Betriebsmodi durch Manipulation der Phase des Laserstrahls in einer zur Objektivpupille konjugierten Ebene mittels eines räumlichen Lichtmodulators (spatial light modulator, SLM) vorzunehmen.

In einer besonders bevorzugten Ausführungsform weist die für alle Betriebsmodi gemeinsame Detektionseinrichtung einen optoelektronischen Bildsensor auf, dessen Sensorpixel zwecks Aktivierung und Deaktivierung einzeln steuerbar sind. Die Ansteuerung des Bildsensors bzw. der einzelnen Sensorpixel wird durch die Steuerschaltung in Abhängigkeit vom vorgegebenen Betriebsmodus veranlasst.

Der Bildsensor weist eine zweidimensionale Anordnung der Sensorpixel auf, so dass es entsprechend der Spinning-Disc-Technologie möglich ist, durch Parallelisierung von Anregung und Detektion mit einer Vielzahl von Spots schnelle und probenschonende konfokale Bilder zu akquirieren. In einer vorteilhaften Ausführung ist jedes Sensorpixel mittels der Steuerschaltung individuell aktivierbar bzw. deaktivierbar, mehrere Sensorpixel sind variabel in Gruppen zusammenfassbar und eine Mehrzahl von unabhängig voneinander auszulesenden Pixel-Regionen auf der Sensorfläche ist frei programmierbar.

Im Falle des weitfeldscannenden Betriebsmodus registriert jeder Pixel der zweidimensionalen Sensormatrix die einem Probenort zugeordnete Intensität der Emission. Die ausgelesenen Daten des Sensors ergeben somit ein monochromes Teilbild. In den konfokalen und linienbeleuchtenden Betriebsmodi kann über eine zusätzliche Optikanordnung jedem Sensorpixel die emittierte Intensität des zugeordneten Probenortes innerhalb eines definierten Spektralbandes entnommen werden. Hierbei liegt die Spektralinformation im Wesentlichen orthogonal zur Ortsinformation über der Sensorfläche verteilt. Somit wird spektrale Bildgebung in diesen Betriebsmodi ermöglicht.

Davon ausgehend kommt als Bildsensor vorzugsweise eine Matrix von Avalanche-Photodioden in Betracht. Als Bildsensoren geeignet sind jedoch außerdem beispielsweise auch Hybrid-Detektoren oder Matrixanordnungen von Photomultipliern.

Der Vorteil eines Avalanche-Photodioden-Arrays gegenüber einer Photomultiplier-Anordnung ist
- kleinere sensitive Elemente, dadurch kameraartiger Betrieb möglich,
- mehr Elemente auf einer bestimmten Fläche möglich,
- ein Füllfaktor bis 100% über eine Rückseitenbeleuchtung ist erzielbar,

Insofern besteht der Erfindungsgedanke unter anderem in der Realisierung einer multifokalen Bildgebung, einer Linienbildgebung sowie einer Weitfeldbildgebung mit ein und demselben Bildsensor. Zwischen diesen Modi kann einfach und schnell geschaltet werden, indem wenige variable optische Baugruppen angesteuert und ebenfalls der Bildsensor durch unmittelbare Umprogrammierung angepasst wird.

Das erfindungsgemäße Laser-Scanning-Mikroskop ist vorzugsweise ausgebildet zur Fluoreszenzmikroskopie mit dem Beleuchtungslicht als Anregungsstrahlung und der davon verursachten Fluoreszenz als Detektionsstrahlung.

### Kurze Beschreibung der Zeichungen

Nachfolgend wird die Erfindung beispielhaft anhand von Zeichnungen näher erläutert. Es zeigen:
- Fig.1: eine Prinzipdarstellung des erfindungsgemäßen Laser-Scanning-Mikroskops,
- Fig.2: ein Beispiel für die Konfiguration des Beleuchtungs- und Detektionsstrahlengangs für den Betriebsmodus Multikonfokalmikroskopie,
- Fig.3: ein Beispiel für die Konfiguration des Beleuchtungs- und Detektionsstrahlengangs für den Betriebsmodus Weitfeldmikroskopie,
- Fig.4: ein Beispiel für die Konfiguration des Beleuchtungs- und Detektionsstrahlengangs für den Betriebsmodus Linienscannmikroskopie,
- Fig.5: ein weiteres auf den Betriebsmodus Multikonfokalmikroskopie bezogenes Beispiel für die Ausgestaltung des Detektionsstrahlengangs im vorgenannten Bereich,
- Fig.6: ein auf den Betriebsmodus Linienscanmikroskopie bezogenes Beispiel für die Ausgestaltung des Detektionsstrahlengangs im vorgenannten Bereich.

### Ausführliche Beschreibung der Zeichnungen

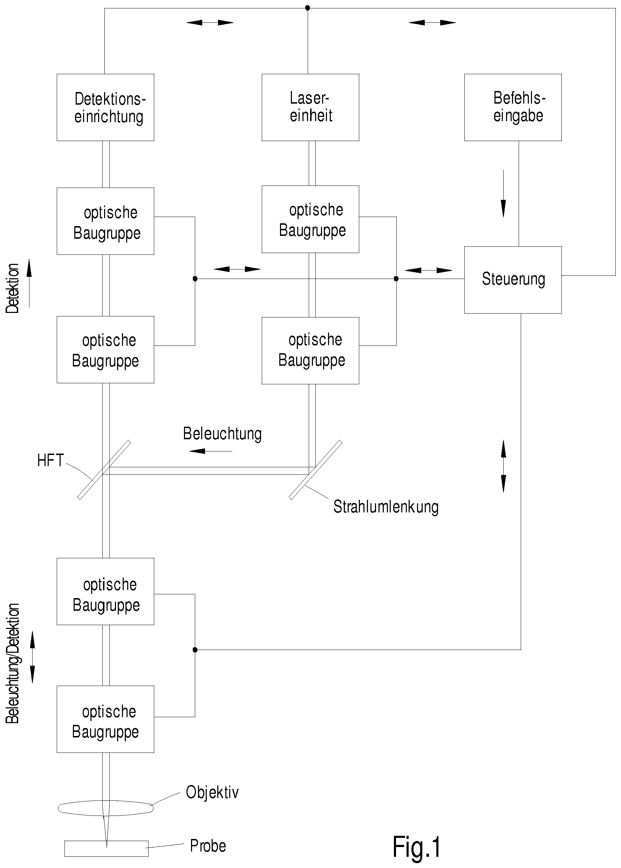

Die in Fig.1 gezeigte Darstellung verdeutlicht den grundsätzlichen Aufbau des erfindungsgemäßen Laser-Scanning-Mikroskops, beispielsweise ausgebildet zur Fluoreszenzmikroskopie.

Es sind eine Lasereinheit und eine Detektionseinrichtung vorgesehen, die im Hinblick auf den Konfokal-, Linien- oder Weitfeld-Betriebsmodus programmierbar sind, d.h. ein Austausch verschiedener Lasereinheiten und/oder Detektionseinrichtungen beim Wechsel der Betriebsmodi ist nicht erforderlich.

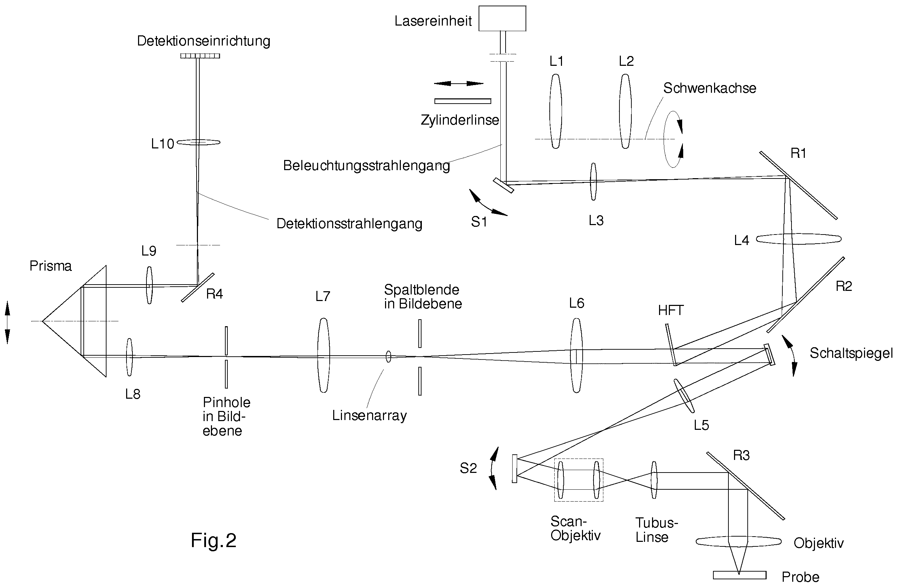

Im Wesentlichen bleibt beim Wechsel der Betriebsmodi auch der Beleuchtungs- und Detektionsstrahlengang erhalten, lediglich sind in den Strahlengängen einige variabel steuerbare optische Baugruppen vorhanden, die zur Anpassung der Strahlführung ausgebildet sind (vgl. Fig.2 bis Fig.4). Die steuerbaren optischen Baugruppen an sich, die optischen Grundelemente des Mikroskopsystems wie Hauptfarbteiler HFT und Strahlumlenkelemente sowie auch das Objektiv bleiben, unabhängig vom gewählten Betriebsmodus, gestellfest in ihren Positionen. Die Probe ist zu Positionierungszwecken, wie aus dem Stand der Technik bekannt, mittels eines vorzugsweise motorisierten Probentisches relativ zum Objektiv in den Koordinaten x,y,z bewegbar.

Mit der Steuerschaltung ist eine Befehlseingabeeinrichtung verbunden, die zur manuellen Vorgabe des jeweils gewünschten Betriebsmodus dient.

In Fig.2 ist der Strahlengang für die Beleuchtung und Detektion im Bildgebungsmodus bei der Konfokal- bzw. Multikonfokalmikroskopie dargestellt, welche Bildraten von ca. 30 fps bei optimaler spektraler Funktionalität ermöglicht.

Als steuerbare optische Baugruppen im Beleuchtungsstrahlengang bis zum Hauptfarbteiler HFT sind eine einschwenkbare Zylinderlinse (alternativ auch eine Powellinse), ein Beleuchtungsscanner S1 sowie eine über eine Schwenkachse drehbar gelagerte Wechseloptik mit einer Einzellinse L3 und einem Teleskop aus den Linsen L1, L2 vorgesehen.

Im dem hier beispielhaft beschriebenen Fall des Konfokal- bzw. Multikonfokalscans ist die Einzellinse L3 in den Beleuchtungsstrahlengang eingeschwenkt. Das am Hauptfarbteiler HFT reflektierte Beleuchtungslicht wird mit dem Schaltspiegel und dem Systemscanner S2, die beide in konjugierten Ebenen zur Pupille des Objektivs liegen, in Richtung des Objektivs abgelenkt. Im multikonfokalen Betriebsmodus wird eine Vielzahl von Laserstrahlen in das System eingekoppelt, die in Form eines Fächers mit fester Winkelbeziehung zueinander aufgespannt sind. Dieser Fächer ist senkrecht zur Zeichenebene der Fig.2 ausgerichtet, d.h. die Vielzahl von Laserstrahlen liegt in der Zeichenebene hintereinander. Die Winkelbeziehung der Strahlen zueinander ist dem Pitch des Linsenarrays angepasst. Der Beleuchtungsscanner S1 ist so gestellt, dass die Strahlenbündel entlang der Achse der nachfolgenden Optiken geführt werden.

Das Linsensystem aus L3 und L4 bildet den Beleuchtungsscanner S1 auf den Schaltspiegel ab, während L5 den Schaltspiegel auf den Systemscanner S2 abbildet. Der Beleuchtungsscanner S1 und der Schaltspiegel liegen damit konjugiert zur Objektivpupille.

Damit liegen jeweils auf dem Beleuchtungsscanner S1, dem Schaltspiegel, dem Systemscanner S2 und im Objektiv Pupillen, in denen sich sämtliche Anregungsstrahlen überlagern. Jeder Teilstrahl erzeugt somit einen Spot im Objektraum, wobei die Spots entlang einer Linie angeordnet sind. Das Spotmuster wird mittels des Systemscanners S2 über die Probe bewegt. Die Anzahl der Spots wird über eine Aktivschaltung oder Abblendung von Teilstrahlen eingestellt. Mittel zur Erzeugung der Vielzahl von Teilstrahlen sind aus dem Stand der Technik bekannt und bedürfen hier keiner ausführlicheren Erläuterung.

Am Hauptfarbteiler HFT, der beispielsweise als Notchfilter ausgefertigt sein kann, erfolgt die Separation von Beleuchtungs- und Detektionslicht.

Entlang des Detektionsstrahlengangs sind ein Schaltspiegel und eine Linse L6 angeordnet, die eine Bildebene erzeugt, in der sich eine (bezüglich der beiden anderen Betriebsmodi per Ansteuerung variable) Spaltblende befindet. Die Bildebene der Linse L6 liegt zudem in der scannerseitigen Brennebene eines nachfolgenden Linsenarrays und einer Pinholeoptik mit einem (bezüglich der beiden anderen Betriebsmodi per Ansteuerung variablem) Pinhole. Das Pinhole ist in der sensorseitigen Bildebene der Linse L7 angeordnet. Dem Pinhole nachgeordnet ist ein Linsensystem aus L8 bis L10, welches die Emission auf eine Detektionseinrichtung abbildet. Ein verschiebbares Prisma optimiert abhängig vom eingestellten Betriebsmodus die Position der von der Probe ausgehenden Emission auf der Sensormatrix.

Die Emission aus den Positionen der Laserbeleuchtung im Objektraum wird mittels des Systemscanners S2 descannt und mit dem Schaltspiegel entlang der optischen Achse der Pinholeoptik ausgerichtet. Insbesondere wird die Kombination aus Schaltspiegel und Hauptfarbteiler HFT so eingestellt, dass jeder Teilstrahl durch eine ihm zugeordnete Linse im Linsenarray kollimiert wird. Da die Teilstrahlen um das dem Linsenarray vorgelagerte Zwischenbild in der Position der Spaltblende telezentrisch geführt werden, erfolgt durch das Linsenarray eine Transformation auf Parallelstrahlführung. Die Teilstrahlen werden durch das Pinhole hindurch nachfolgend auf den Bildsensor der Detektionseinrichtung abgebildet. Die Detektionseinrichtung ist vorzugsweise mit einem Avalanche-Photodioden-Array als Bildsensor ausgestattet.

Sowohl im konfokalen Betriebsmodus als auch in den anderen beiden Betriebsmodi befindet sich an der Position der Spaltblende stets eine Bildebene, die zugleich auch in der Brennebene des Linsenarrays als auch in der Brennebene der Linse L7 liegt.

Der in Fig.2 dargestellte konfokale Betriebsmodus entspricht grundsätzlich dem Basismodus des erfindungsgemäßen funktionsintegrierten Laser-Scanning-Mikroskops. In diesem Modus wird, wie aus Fig.2 ersichtlich, die Detektionsstrahlung durch das Linsenarray hindurch geführt. Auf den jeweiligen optischen Achsen des Linsenarrays liegende Laserspots werden als Teilstrahlen mittels des Linsenarrays kollimiert und telezentrisch bis zur Linse L7 weiter geführt, die die telezentrischen, kollimierten Teilstrahlen auf einen gemeinsamen Punkt in der Pinholeebene fokussiert. Es bedarf daher nur dieses einen Pinholes, um auf allen Teilstrahlen konfokal zu filtern, dabei wird die Apertur des Pinholes auf die gewünschte Größe reduziert, in diesem Betriebsmodus beispielsweise auf einen Öffnungsdurchmesser, der einer Airyeinheit entspricht.

In den anderen beiden Betriebsmodi, bei denen mittels linienförmiger bzw. flächiger Anregung eine semikonfokale bzw. feldscannende Bildgebung erfolgt, würde das Linsenarray im Strahlengang stören, weil es das Bildfeld stark segmentiert. Daher wird in diesen Fällen die Detektionsstrahlung mit dem Schaltspiegel in einen gesonderten Detektionspfad gelenkt und so am Linsenarray vorbei geführt.

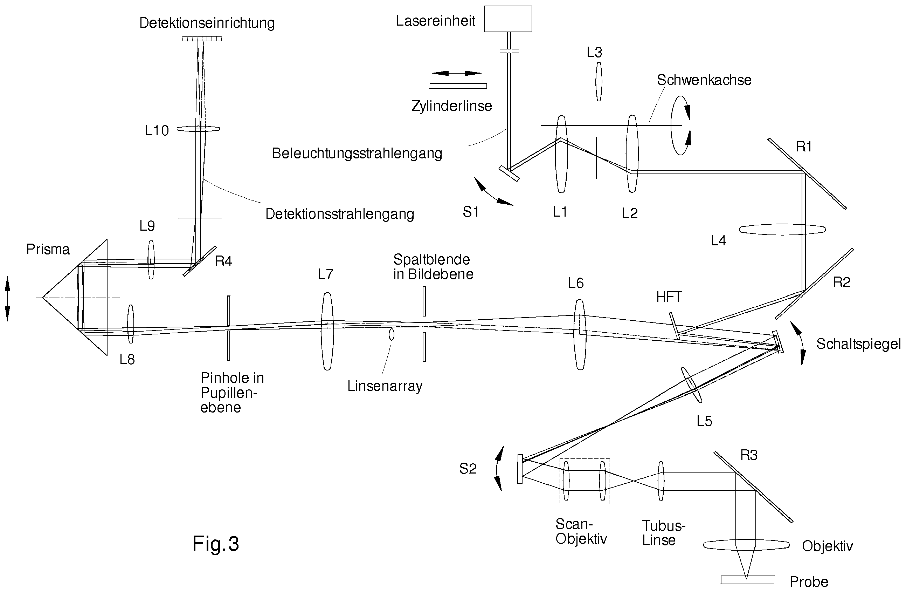

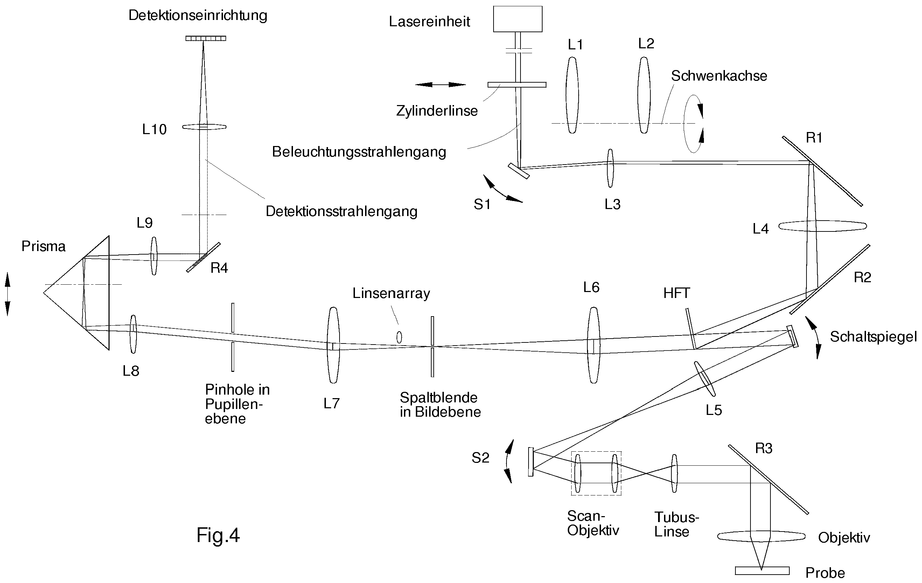

Während also die Linse L7 im konfokalen Betriebsmodus alle Teilstrahlen auf die optische Achse in der Pinholeebene abbildet, ist die Pinholeebene als hintere Fokusebene der Linse L7 in den beiden anderen Betriebsmodi, d.h. in der Feld- oder Linienkonfiguration, zur Objektivpupille konjugiert (vgl. Erläuterungen zu Fig.3 und Fig.4).

Das Linsensystem aus L8 und L9 ist ein Relaysystem, welches die Pinholeebene in die Schnittstelle zur Detektoroptik abbildet. Die Linse L10 steht symbolisch für die Detektoroptik.

Damit ergeben sich folgende vorteilhafte Eigenschaften der Anordnung, die die erfindungsgemäße Umschaltbarkeit zwischen allen wählbaren Betriebsmodi unterstützen:
- kleine Aperturen am Linsenarray,
- große Aperturen an der Linse L7,
- die Spaltblende an einer Bildebene,
- die scannerseitigen Brennebenen von Linsenarray und Linse L7 liegen gemeinsam in der Position der Spaltblende,
- die Spaltblende ist steuerbar um den Spalt so weit zu öffnen, dass das Teilfeld übertragen werden kann,
- das Pinhole ist steuerbar, um sich mindestens auf die in der Pinholeebene vorliegende Pupillenberandung öffnen zu lassen.

Als eine von der Beschreibung abweichende Ausgestaltungsvariante kann die Aufspiegelung der Beleuchtungsstrahlen in den Detektionsstrahlengang zwischen dem Linsenarray und der Pinholeoptik erfolgen. Dann sind die Teilstrahlen bereits im Beleuchtungsstrahlengang parallel zu führen.

Durch Reduktion der Anzahl der Teilstrahlen kann anstelle der multifokalen Bildgebung selbstverständlich auch monofokaler Betrieb, wie aus dem Stand der Technik der Laser-Scanning-Mikroskopie bekannt, ausgeführt werden.

Fig.3 zeigt ein Beispiel für die Konfiguration des Beleuchtungs- und Detektionsstrahlengangs im Betriebsmodus der Weitfeld- bzw. Feldscanmikroskopie.

In dem hier dargestellten Fall ist das Teleskop aus den Linsen L1, L2 anstelle der Einzellinse L3 in den Beleuchtungsstrahlengang eingeschwenkt. Das vom Hauptfarbteiler HFT reflektierte Beleuchtungslicht wird mit dem Schaltspiegel und dem Systemscanner S2 wiederum in Richtung Objektiv abgelenkt, wobei aber ein Laserfokus auf beiden entsteht, der mit möglichst schneller Scannbewegung des Beleuchtungsscanners S1 über die Pupillenebene bewegt wird.

Die so im gesamten Feld des Objektivs angeregte Fluoreszenz leuchtet auf dem Rückweg von der Probe die Objektivpupille komplett aus. Die Objektivpupille wird in die konjugierten Ebenen auf dem Systemscanner S2 und dem Schaltspiegel abgebildet. Der Schaltspiegel ist im dargestellten Falle des Feldscans durch Ansteuerung so gestellt, dass das übertragbare Feld, vom Hauptfarbteiler HFT transmittiert, auf einem gesonderten Detektionspfad außeraxial an dem Linsenarray vorbei gelenkt wird.

Sowohl das im Detektionsstrahlengang angeordnete variable Pinhole als auch die variable Spaltblende vor dem Linsenarray sind in dem hier dargestellten Betriebsmodus weit geöffnet.

Der Systemscanner S2 bestimmt mittels eines per Ansteuerung eingestellten Offsetwinkels die Lage des abgebildeten Teilfeldes im verfügbaren Objektfeld des Mikroskopobjektivs. Optional kann auch noch eine Feldblende (nicht dargestellt) in der ersten Zwischenbildebene hinter dem Objektiv gemeinsam mit dem Scanneroffset bewegt werden, um ein Überbeleuchten von Probenbereichen außerhalb des detektierbaren Objektfeldes zu verhindern bzw. zu minimieren.

Alternativ kann an dieser Stelle ein Beleuchtungszoom vorgesehen sein, um die numerische Apertur (NA) der Beleuchtung zu beschränken und damit die Größe des ausgeleuchteten Objektfeldes zu kontrollieren. Eine Anpassung der NA kann jedoch auch in der Wechseloptik vorgesehen und so ausgelegt sein, dass das übertragbare Feld vollständig ausgeleuchtet wird.

Fig.4 zeigt den Strahlengang für den Linienscanmodus. In diesem Fall wird die Zylinderlinse in den Beleuchtungsstrahlengang gestellt, so dass eine linienförmige Lichtverteilung auf dem Beleuchtungsscanner S1 entsteht, wobei der Beleuchtungsscanner S1 in der Brennebene der Zylinderlinse liegt. Die Wechseloptik steht so, dass sich die Einzellinse L3 im Beleuchtungsstrahlengang befindet. Damit liegt wiederum eine Pupillenebene auf dem Beleuchtungsscanner S1, dem Schaltspiegel, dem Systemscanner S2 und im Objektiv. Das Objektiv erzeugt dann einen Linienfokus im Objektraum, welcher mit dem Systemscanner S2 senkrecht zur Linienrichtung gescannt und mittels Offsetwinkeln positioniert wird.

Die Emission aus dem Linienfokus wird durch den Systemscanner S2 descannt und bei entsprechender Stellung des Schaltspiegels am Linsenarray vorbei gelenkt. Die Spaltblende im Zwischenbild vor dem Linsenarray wird auf die gewünschte Breite gezogen, um eine semikonfokale Detektion zu erreichen. Das nachgelagerte Pinhole ist maximal geöffnet. Das verschiebbare Prisma zieht das Zentrum der Linienverteilung auf die Achse des Bildsensors der Detektionsoptik. Der Bildsensor liegt im Falle des Linienscanmodus in einer zum Spalt konjugierten Bildebene.

In Ausgestaltungsvarianten, die ebenfalls im Rahmen des Erfindungsgedankens liegen, ist abweichend von der obigen Beschreibung anhand Fig.2 bis Fig.4 die bevorzugte Position des verschiebbaren Prismas je nach Betriebsmodus nicht diejenige, die das Zentrum des übertragenen Feldes auf die Achse der nachfolgenden Optik lenkt, sondern diejenige Position, die den Bildsensor für den jeweils gewählten Betriebsmodus am effizientesten nutzbar macht. Konkret bedeutet das, dass
a. beim Feldscan das übertragbare Feld symmetrisch zur Bildsensormitte auf den Bildsensor abgebildet wird,
b. beim Linienscan die linienförmige Emissionsverteilung senkrecht zur Linienausrichtung mit einem Prisma oder Gitter spektral dispergiert wird und das spektral aufgespaltene Abbild der Linie symmetrisch zur Sensormitte oder, beginnend mit einer gewählten Startwellenlänge, am Sensorrand auf den Bildsensor abgebildet wird,
c. beim multifokalen Scan die einzelnen Teilstrahlen durch ein weiteres Linsenarray geführt werden, während die anschließende spektrale Abbildung der Emissionsverteilung dann analog zu der Beschreibung des Linienscans erfolgt,

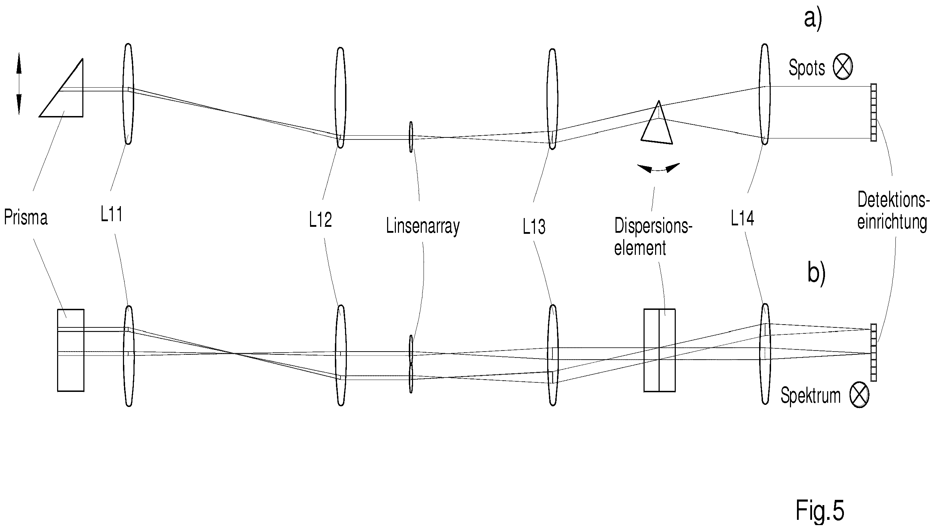

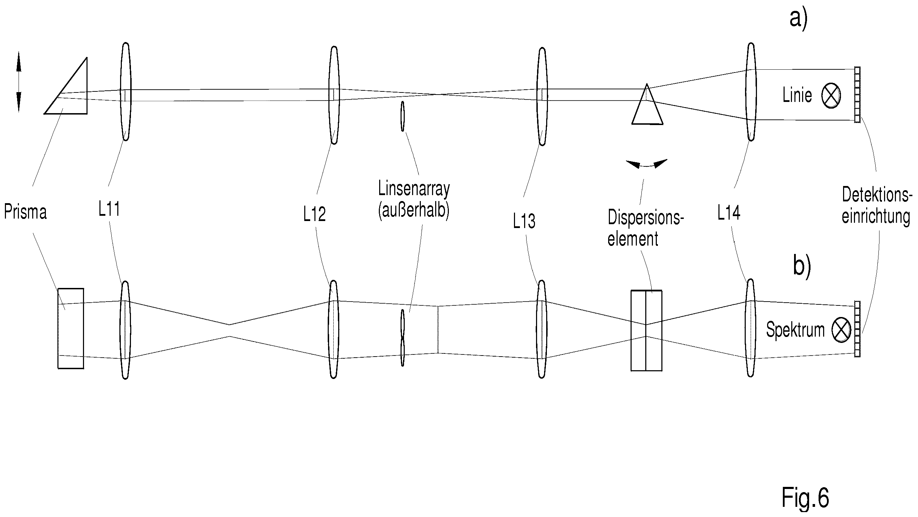

Die für b) und c) notwendige Umschaltung des Detektionsstrahlenganges kann beispielsweise durch das verschiebbare Prisma erfolgen. Dies ist in Fig.5 und Fig.6 schematisch gezeigt.

In Fig.5 ist anhand eines Beispiels für den multifokalen Betrieb der optische Weg von dem verschiebbaren Prisma bis zur Sensorebene ausführlicher dargestellt. Fig.5a) stellt eine Draufsicht, dagegen Fig.5b) eine Seitenansicht auf den Detektionsstrahlengang dar. Dem verschiebbaren Prisma nachgelagert sind zwei Relayoptiken aus den Linsenpaaren L11/L12 und L13/14, die die Emission in die Sensorebene abbilden. Zwischen beiden Relayoptiken befindet sich ein Linsenarray, welches wiederum gestellfest angeordnet ist.

Im hier dargestellten Fall des Multifokalbetriebes ist das verschiebbare Prisma so eingestellt, dass die Emission durch das Linsenarray geführt wird. Damit werden die Teilstrahlen in die Brennebene der nachfolgenden Relayoptik abgebildet. Zwischen den Linsen L13 und L14 werden die Teilstrahlen nun kollimiert und in fester Winkelbeziehung zueinander geführt. In der gemeinsamen Brennebene von L13 und L14 befindet sich ein dispergierendes Element, beispielsweise ein Prisma, welches die in den Teilstrahlen geführte Emission in ihre spektralen Bestandteile zerlegt. Vorteilhafterweise liegt die Dispersionsrichtung senkrecht zu dem durch die Teilstrahlen aufgespannten Fächer. Linse L14 bildet die spektraldispergierte Emission auf den Sensor ab. Dabei sind Spots und Spektrum vorteilhaft senkrecht zueinander angeordnet.

Der Sensor liegt nun unabhängig vom gewählten Betriebsmodus in einer zur Probe konjugierten Ebene. Bei den anderen beiden Betriebsmodi dagegen, nämlich Linie- und Feldscan, würde die Detektionsstrahlung an diesem Linsenarray vorbei geführt werden.

Im linienscannenden Betriebsmodus ist das verschiebbare Prisma, wie in Fig.6 dargestellt, so eingestellt, dass die Emission am Linsenarray vorbei geführt wird. Die Spektralablagen auf dem Bildsensor werden für den multikonfokalen Betriebsmodus (Fig.5) und den linienscannenden Betriebsmodus (Fig.6) mit demselben Dispersionselement erzeugt. Die Position des Spektrums auf der Sensormatrix wird im Bedarfsfall durch eine Drehung der Dispersionsoptik vorgenommen, wie dies aus Fig.5 in Bezug auf den multikonfokalen Modus und aus Fig.6 in Bezug auf den Linienscan-Modus hervorgeht. Für den feldscannenden Modus wird das Dispersionselement aus dem Strahlweg entfernt.

Das Umschalten zwischen Pupille und Feld kann prinzipiell mit einschwenkbaren Bertrandlinsen erfolgen oder mittels schaltbarer Lichtpfade. Elemente zum Schalten sind wie bereits aufgeführt Spiegel für die Winkelseparation (vorzugsweise MEMS), Planplatten für die laterale Separation oder Prismen für beides geeignet.

## Patentansprüche

1. Funktionsintegriertes Laser-Scanning-Mikroskop, ausgebildet zur Abtastung einer Probe mit einer Laserbeleuchtung wahlweise in einem Konfokal-, Linien- oder Weitfeld-Betriebsmodus mit punkt-, linien- bzw. feldförmiger Beleuchtung der Probe oder eines Probenbereichs, umfassend
- eine Laserlichtquelle, einen Beleuchtungs- und Detektionsstrahlengang, eine Detektionseinrichtung und mindestens ein Objektiv, jeweils ausgebildet zur Nutzung für jeden wählbaren Betriebsmodus, wobei
- der Beleuchtungs- und Detektionsstrahlengang optische Mittel zur Konfiguration der Laserbeleuchtung, mindestens einen Scanner zur Abtastung der Probe mit der Laserbeleuchtung, und einen Strahlteiler zur Trennung von Beleuchtungs- und Detektionslicht umfasst, **dadurch gekennzeichnet, dass**
- der Detektionsstrahlengang für jeden der wählbaren Betriebsmodi an demselben Bildsensor der Detektionseinrichtung endet,
- im Detektionsstrahlengang steuerbare optische Elemente angeordnet sind, wobei eines der steuerbaren optischen Elemente als Schaltelement zur Änderung der Strahlführung durch Einkopplung der Detektionsstrahlung in unterschiedliche Detektionspfade in Abhängigkeit vom jeweils gewählten Betriebsmodus ausgebildet ist, wobei jeweils ein Detektionspfad einem Betriebsmodus fest zugeordnet ist, und
- in einem ersten Detektionspfad die Detektionsstrahlung durch mindestens eine im Strahlengang gestellfest angeordnete optische Baugruppe durchgeleitet und beeinflusst wird,
- in einem zweiten Detektionspfad die Detektionsstrahlung um diese optische Baugruppe herum umgeleitet wird,
- wobei der erste Detektionspfad dem Konfokal-Betriebsmodus und der zweite Detektionspfad dem Linien- oder dem Weitfeld-Betriebsmodus zugeordnet ist,
- wodurch im ersten Detektionspfad an einer definierten Position eine Bildebene, in der ein Pinhole angeordnet ist, und im zweiten Detektionspfad an der Stelle der Bildebene eine Pupillenebene ausgebildet ist.

2. Funktionsintegriertes Laser-Scanning-Mikroskop nach Anspruch 1, mit
- einer Steuerschaltung für die steuerbaren optischen Baugruppen,
- einer Befehlseingabeeinrichtung zur Veranlassung der Umschaltung vom aktuellen auf einen anderen wählbaren Betriebsmodus, sowie
- Hard- und Software zum Generieren von Bildern der Probe aus den von der Detektionseinrichtung abgegebenen elektronischen Bildsignalen.

3. Funktionsintegriertes Laser-Scanning-Mikroskop nach Anspruch 1 oder 2, bei dem die gestellfeste optische Baugruppe als Linsenarray ausgebildet ist.

4. Funktionsintegriertes Laser-Scanning-Mikroskop nach einem der vorgenannten Ansprüche, bei dem im Detektionsstrahlengang ein weiteres steuerbares optisches Schaltelement vorhanden ist, ausgebildet zur definierten Einkopplung der im jeweiligen Betriebsmodus über den zugeordneten Detektionspfad übertragenen Detektionsstrahlung in die Detektionseinrichtung.

5. Funktionsintegriertes Laser-Scanning-Mikroskop nach einem der vorgenannten Ansprüche, bei dem im Beleuchtungsstrahlengang steuerbare optische Baugruppen zur Variation der Strahlführung in Abhängigkeit vom jeweils gewählten Betriebsmodus vorhanden und mit der Steuerschaltung verbunden sind.

6. Funktionsintegriertes Laser-Scanning-Mikroskop nach Anspruch 5, bei dem im Beleuchtungsstrahlengang
- ein Beleuchtungsscanner (S1) vorhanden ist, ausgebildet zum Bewegen der Laserbeleuchtung über die Objektivpupille hinweg, wobei die Bewegung in Abhängigkeit vom jeweils gewählten Betriebsmodus vorgegeben ist, und in den Beleuchtungsstrahlengang
- während des Konfokal-Betriebsmodus eine Linsenbaugruppe (L3) eingeschwenkt ist,
- während des Linien-Betriebsmodus die Linsenbaugruppe (L3) und eine Zylinderlinse eingeschwenkt sind, und
- während des Weitfeld-Betriebsmodus anstatt der Linsenbaugruppe (L3) und der Zylinderlinse ein Teleskop eingeschwenkt ist.

7. Funktionsintegriertes Laser-Scanning-Mikroskop nach einem der vorgenannten Ansprüche, ausgestattet
- mit einem optoelektronischen Bildsensor, dessen Sensorpixel zwecks Aktivierung und Deaktivierung einzeln steuerbar sind, vorzugsweise in Form eines Arrays aus Avalanche-Photodioden, und
- mit einer Schaltung zur Ansteuerung der einzelnen Sensorpixel in Abhängigkeit von dem jeweils gewählten Betriebsmodus.

8. Funktionsintegriertes Laser-Scanning-Mikroskop nach einem der vorgenannten Ansprüche, bei dem die optischen Schaltelemente als Schaltspiegel oder bewegliche Prismen ausgebildet sind.

9. Funktionsintegriertes Laser-Scanning-Mikroskop nach einem der vorgenannten Ansprüche, ausgebildet zur Fluoreszenzmikroskopie mit dem Beleuchtungslicht als Anregungsstrahlung und der davon verursachten Fluoreszenz als Detektionsstrahlung.

## Claims

1. Functionally integrated laser scanning microscope formed for scanning a sample by means of a laser illumination selectively in a confocal, line or widefield operating mode with point-, line- or field-shaped illumination of the sample or of a sample region comprising
- a laser light source, an illumination and detection beam path, a detection apparatus and at least one objective, each formed for use in each selectable operating mode, wherein
- the illumination and detection beam path comprise optical means for configuring the laser illumination, at least one scanner for scanning the sample by means of the laser illumination, and a beam splitter for splitting illumination and detection light, **characterized in that**
- for each of the selectable operating modes, the detection beam path ends at the same image sensor of the detection apparatus,
- controllable optical elements are arranged in the detection beam path, wherein one of the controllable optical elements is formed as a switch element for changing the beam guidance by means of incoupling the detection radiation into different detection paths in dependence on the respective selected operating mode, wherein a respective detection path is fixedly assigned to each operating mode, and
- in a first detection path, the detection radiation is passed through and influenced by at least one optical assembly arranged as fixed in position in the beam path,
- in a second detection path, the detection radiation is redirected around this optical assembly,
- wherein the first detection path is assigned to the confocal operating mode and the second detection path is assigned to the line or widefield operating mode,
- whereby an image plane in which a pinhole is arranged is formed at a defined position in the first detection path and a pupil plane is formed in the second detection path at the location of the image plane.

2. Functionally integrated laser scanning microscope according to Claim 1, having
- a control circuit for the controllable optical assemblies,
- a command input device for triggering the switching from the current to another selectable operating mode, and
- hardware and software for generating images of the sample from the electronic image signals emitted by the detection apparatus.

3. Functionally integrated laser scanning microscope according to Claim 1 or 2, wherein the optical assembly which is fixed in position is formed as a lens array.

4. Functionally integrated laser scanning microscope according to any of the preceding claims, wherein in the detection beam path there is a further controllable optical switch element, formed for defined incoupling of the detection radiation that is transmitted by way of the assigned detection path in the respective operating mode, into the detection apparatus.

5. Functionally integrated laser scanning microscope according to any of the preceding claims, wherein controllable optical assemblies for varying the beam guidance in dependence on the respective selected operating mode are present in the illumination beam path and are connected to the control circuit.

6. Functionally integrated laser scanning microscope according to Claim 5, wherein in the illumination beam path
- an illumination scanner (S1) is present, formed for moving the laser illumination across the objective pupil, wherein the movement is prespecified in dependence on the respective selected operating mode, and in the illumination beam path
- a lens assembly (L3) is pivoted in during the confocal operating mode,
- the lens assembly (L3) and a cylindrical lens are pivoted in during the line operating mode, and
- a telescope is pivoted in during the widefield operating mode instead of the lens assembly (L3) and the cylindrical lens.

7. Functionally integrated laser scanning microscope according to any of the preceding claims, equipped
- with an optoelectronic image sensor, the sensor pixels of which are individually controllable for the purpose of activating and deactivating, preferably in the form of an array made of avalanche photodiodes, and
- with a circuit for actuating the individual sensor pixels in dependence on the respective selected operating mode.

8. Functionally integrated laser scanning microscope according to any of the preceding claims, wherein the optical switch elements are formed as switch mirrors or movable prisms.

9. Functionally integrated laser scanning microscope according to any of the preceding claims, formed for fluorescence microscopy with the illumination light as excitation radiation and the fluorescence caused by this as detection radiation.

## Revendications

1. Microscope à balayage laser à fonctions intégrées, conçu pour balayer un échantillon au moyen d'un éclairage laser au choix dans un mode de fonctionnement confocal, ligne à ligne ou grand champ, au moyen d'un éclairage ponctuel, ligne à ligne ou grand champ de l'échantillon ou d'une région de l'échantillon qui comprennent
- une source de lumière laser, un trajet de faisceau d'éclairage et de détection, un dispositif de détection et au moins un objectif, chacun conçu pour être utilisé dans chaque mode de fonctionnement sélectionnable, dans lequel
- le trajet de faisceau d'éclairage et de détection comprend des moyens optiques servant à configurer l'éclairage laser, au moins un dispositif de balayage servant à balayer l'échantillon à l'aide de l'éclairage laser, et un diviseur de faisceau servant à diviser la lumière d'éclairage et de détection, **caractérisé en ce que**
- le trajet de faisceau de détection, pour chacun des modes de fonctionnement sélectionnables, se termine au niveau d'un même capteur d'image du dispositif de détection,
- des éléments optiques commandables sont disposés dans le trajet de faisceau de détection, dans lequel l'un des éléments optiques commandables est réalisé sous la forme d'un élément de commutation servant à modifier le guidage du faisceau par injection du rayonnement de détection dans différents trajets de détection en fonction du mode de fonctionnement respectivement sélectionné, dans lequel un trajet de détection est respectivement associé de manière fixe à un mode de fonctionnement, et
- dans un premier trajet de détection, le rayonnement de détection est acheminé et influencé par au moins un sous-ensemble optique disposé de manière fixe dans le trajet de faisceau,
- dans un second trajet de détection, le rayonnement de détection est réacheminé autour dudit sous-ensemble optique,
- dans lequel le premier trajet de détection est associé au mode de fonctionnement confocal et le second trajet de détection est associé au mode de fonctionnement ligne à ligne ou grand champ,
- d'où il résulte qu'un plan image dans lequel se trouve un trou d'épingle est formé à une position définie dans le premier trajet de détection, et qu'un plan de pupille est formé dans le second trajet de détection à l'emplacement du plan image.

2. Microscope à balayage laser à fonctions intégrées selon la revendication 1, comportant
- un circuit de commande destiné aux sous-ensembles optiques commandables,
- un dispositif de saisie d'instructions pour déclencher le basculement du mode de fonctionnement actuel vers un autre mode de fonctionnement sélectionnable, ainsi que
- des moyens matériels et logiciels permettant de générer des images de l'échantillon à partir des signaux d'image électroniques délivrés par le dispositif de détection.

3. Microscope à balayage laser à fonctions intégrées selon la revendication 1 ou 2, dans lequel le sous-ensemble optique fixé à la monture est réalisé sous la forme d'un réseau de lentilles.

4. Microscope à balayage laser à fonctions intégrées selon l'une des revendications précédentes, dans lequel un autre élément de commutation optique commandable est présent dans le trajet de faisceau de détection, et est conçu pour injecter de manière définie dans le dispositif de détection le rayonnement de détection transmis dans le mode de fonctionnement respectif par le biais du trajet de détection associé.

5. Microscope à balayage laser à fonctions intégrées selon l'une des revendications précédentes, dans lequel des sous-ensembles optiques commandables servant à faire varier le guidage du faisceau en fonction du mode de fonctionnement respectivement sélectionné sont présents dans le trajet de faisceau d'éclairage et sont reliés au circuit de commande.

6. Microscope à balayage laser à fonctions intégrées selon la revendication 5, dans lequel, dans le trajet de faisceau d'éclairage
- il est prévu un dispositif de balayage de l'éclairage (S1), conçu pour déplacer l'éclairage laser sur la pupille de l'objectif, dans lequel le mouvement est prédéterminé en fonction du mode de fonctionnement sélectionné et, dans le trajet de faisceau d'éclairage
- un sous-ensemble à lentilles (L3) est amené à pivoter pendant le mode de fonctionnement confocal,
- le sous-ensemble à lentilles (L3) et une lentille cylindrique sont amenés à pivoter pendant le mode de fonctionnement ligne à ligne, et
- un télescope est amené à pivoter au lieu du sous-ensemble à lentilles (L3) et de la lentille cylindrique pendant le mode de fonctionnement à grand champ.

7. Microscope à balayage laser à fonctions intégrées selon l'une des revendications précédentes, doté
- d'un capteur d'images optoélectronique dont les pixels de détection peuvent être commandés individuellement à des fins d'activation et de désactivation, de préférence sous la forme d'un réseau de photodiodes à avalanche, et
- d'un circuit permettant de commander les pixels de détection individuels en fonction du mode de fonctionnement respectivement sélectionné.

8. Microscope à balayage laser à fonctions intégrées selon l'une des revendications précédentes, dans lequel les éléments de commutation optiques sont réalisés sous la forme de miroirs de commutation ou de prismes mobiles.

9. Microscope à balayage laser à fonctions intégrées selon l'une des revendications précédentes, conçu pour la microscopie à fluorescence et utilisant la lumière d'éclairage en tant que rayonnement d'excitation et la fluorescence ainsi provoquée en tant que rayonnement de détection.
